# EUROPEAN PATENT APPLICATION

(11) **EP 0 673 794 A1**
(43) Date of publication of application: **27.09.1995**
(21) Application number: 94203183.2
(22) Date of filing: 02.11.1994
(51) Int. Cl.: B60D 1/60

(54) **Protecting device for trailer**

(30) Priority: 24.03.1994 NL 9400469
(71) Applicant: WNO METAAL BEDRIJF, NL-6503 GE Nijmegen (NL)
(72) Inventor: DERKS, Hendrikus Petrus, NL-6617 BD Bergharen (NL); SMITS, Antonius Johannes Hendrikus, NL-6617 CE Bergharen (NL); GOMMERS, Roland Cornelis Wilhelmus, NL-6651 CS Druten (NL); VOS, Hendrikus Gerardus, NL-6605 AE Wijchen (NL)
(74) Representative: de Bruijn, Leendert C.

(57) **Abstract**

A device for protecting the coupling piece of a trailer (1), such as a caravan, against detachment from the towing hook, comprising a housing (2) which can be attached to the coupling piece (1) and is provided with latching means for latching the coupling piece (1) in the coupling position. The device may comprise a coupling piece (1) having a hollow internally partly spherical head (3), as well as a ball fastener (4) which interacts with the latter and which is displaceable between an open position in which the ball of a towing hook can be moved into or out of the coupling piece, and a closed position in which the latching means are designed to latch the ball fastener in the closed position.

## Description

The invention relates to a device for protecting the coupling piece of a trailer, such as a caravan, against detachment from the towing hook. By means of such a device, it is intended to prevent theft of a trailer. Generally, a padlock is used for this purpose, which latches the lever of the ball fastener.

In practice, a protection of this kind has been found to be unsatisfactory. The padlock is a separate part which may get lost. In addition, with known protection means, it is possible to forget locking up, while in many cases, it is required for the purpose of insurance against theft to prove that the protection means used were indeed being used/applied at the time the theft took place.

The object of the invention is therefore to provide a protection which is more reliable. This object is achieved in that the device comprises a housing which can be attached to the coupling piece and which is provided with latching means for latching the coupling piece in the coupling position.

Since the housing of the device is attached to the coupling piece, it is ensured that the device is always at the disposal of the user. Moreover, it takes considerably more time to break the housing than the shackle of a padlock, so that protection against theft is improved considerably.

With most trailers, such as caravans, a coupling piece is used having a hollow, internally partly spherical head as well as a ball fastener which interacts with the latter and which is displaceable between an open position in which the ball of a towing hook can be moved into or out of the coupling piece, and a closed position. According to the invention, in this case, the latching means are designed to latch the ball fastener in the closed position.

To this end, a latching plate is provided which is hingedly suspended between a latching position in which it prevents the ball fastener from moving into the open position, and a releasing position.

In addition, the housing may be provided with a lock mechanism and the latching plate may be provided with a locking component which can be latched by means of the lock mechanism.

According to a preferred embodiment, the device is provided with two opposite sides between which the head of the coupling piece can be accommodated, said sides being provided with holes for attachment of the device on the head.

Preferably the holes of the device can be aligned with the holes in the head, in which holes of the head and housing a fastening bolt can be placed in order to fasten both the head and the housing to the pole of the trailer. In that case, the device can be secured using the same bolts as were used to secure the coupling piece itself, so that adjustments of the pole or the coupling piece in connection with the fastening thereof are unnecessary.

The latching plate may be of L-shaped design in such a manner that one leg of the L is fastened to the hinge, and the other leg of the L carries the locking component.

If the leg fastened to the hinge is provided with a cap which, in the latched position of the latching plate covers the head of a fastening bolt, a protection against detachment of the fastening bolts can also be achieved when the device is in the latched position. Such an embodiment of the device is particularly important with coupling pieces which have internal damping means for counteracting rolling. Such coupling pieces are expensive and are therefore often targeted by thieves.

The latching plate may be provided with a thickening which is located, in the latched position of the latching plate, near the ball fastener in order to prevent the opening thereof.

The latching plate may be provided with inhibiting means for inhibiting the locking component from falling out of the housing once the device has been mounted on the head. The locking component could fall out of the housing during the operation of the lock mechanism when the device is turned from the latched to the unlatched position and back. The inhibiting means are to be fitted in the housing subsequent to the mounting of the device on the coupling piece. The inhibiting means comprise, for example, an additional tooth on the locking component or a bolt or pin which is fitted in the housing after the mounting operations.

The latching plate may be provided with a locking plate for locking the internal space of the hollow head. Such a locking plate can be used in order to protect the trailer against theft when it is not coupled. The locking plate covers the internal hollow space of the coupling piece in such a manner that it is not possible to couple the trailer to a towing hook, not even when the ball has been sawn off.

According to a further embodiment of the device according to the invention, the locking component comprises at least two locking component parts. In this case, one locking component part is designed as having a groove and a through-opening. This embodiment is necessary in order to construct a mechanism to be described below for latching the lock in the open position of the device.

According to another embodiment of the device according to the invention, the hinge may be of the kind which comprises a male and a female part, which are fitted to the latching piece or the fastening plate, respectively, or the other way round, or are integral with them. In order to prevent these parts sliding off each other, two thickenings are provided which are disposed on the latching plate and the fastening plate, respectively.

According to a further embodiment of the device according to the invention, the lock mechanism comprises a frame, lock, arm, catch, guide block, shaft and the latch. Thus, a mechanism is created with which the latch can engage in an opening with one of the locking components, as a result of which the latching plate can be latched or released.

According to a further embodiment of the device according to the invention, a guide is fitted on the housing. This guide may be provided with a through-opening in the longitudinal direction of the guide, in which opening a pin can be fitted so as to be slidable. This pin may comprise a head at one end and a catch at its other end. Furthermore, a spring may be provided in the through-opening of the guide, so as to pull the head of the pin inside the guide or to keep it inside the latter. The pin serves as a means for latching the lock in order to prevent the possibility that the key be removed from the lock when the device is in the open position. The key may only be removed from the lock when the device is in the closed position.

For the purpose of mounting the device from both sides of the coupling piece, it should be possible temporarily to inactivate the latch mechanism described in the previous paragraph. To this end, the catch of the pin has to be outside the groove of one of the locking component parts. In order to make this situation possible, a plate is provided which comprises a groove and an eye. This plate can be placed between the head of the pin, and, because of its slit, around the shaft of the pin, and the free end of the guide. This plate thereby prevents the pin being pulled into the guide as a result of spring force, which would lead to the catch of the pin ending up in the housing and in the groove of one of the locking component parts, which would make mounting and removal impossible. The plate may comprise an eye with which the plate can be attached to a key ring or the like in order to prevent the plate being lost as much as possible.

For the purpose of removal of the device, the plate described previously has to be placed between the head of the pin and the free end of the guide. However, if the pin is completely inside the guide, the head of the pin should first be pushed out of said guide for this purpose. To this end, a closable opening is provided in the frame, through which an elongated pin or another tool can be introduced in order to move the catch of the pin counter to the spring force. The groove which is provided in one of the locking component parts also has an opening through which said elongated pin or other tool can also be introduced in order to be able to touch the catch of the pin when the device is in the closed position. When the device is in the open position, it should not be possible to operate the catch, and thus the pin. To this end, said opening is only provided in a single, specific location in the groove which is disposed in one of the locking component parts.

Said opening in the frame can be closed by means of, for example, a cover which comprises a body and a pin, this body having a through-opening which narrows in the longitudinal direction with respect to the pin. The pin can be fitted to the body by means of a weakened edge or the pin and the body can form two separate, fitting elements.

In a further embodiment of the device according to the invention, a sleeve is fitted around at least one of the fastening bolts. Thereby, the assembly of the device according to the invention, the coupling piece and the pole are strengthened against compression on both sides of the coupling piece. This compression might be initiated in order to force open the device so that its latching action ends.

According to a further embodiment of the device according to the invention, a plate is fitted in the housing between the inside of the wall of the housing and one end of the latch. This plate can be made of hard metal, thus forming a protection for the mechanisms which are inside the housing. Such a hard-metal plate makes it more difficult to push the latch, the guide block or the arm out of the way by introducing a pin, screwdriver or other tool after the wall of the housing has been penetrated, as a result of which the device could be unlatched.

The coupling pieces of various suppliers are of varying size. In order to make the device according to the invention fit on a large number of the various coupling pieces available, spacing bushes of varying thicknesses are provided between, for example, the fastening plates and the coupling piece. Likewise, rings may be provided between the nuts and/or bolt heads and, for example, the fastening plates.

The invention will be illustrated in more detail below with reference to the accompanying drawing in which an illustrative embodiment is worked out. In the drawing:
Figure 1 shows the device according to the invention in perspective view, seen from below;
Figure 2 shows the device according to the invention in perspective view, seen from above;
Figure 3 shows the device of Figure 2 in cross section and partly cut-away;
Figure 4 shows another embodiment of the device according to the invention in perspective view, seen from below;
Figure 5 shows the embodiment according to Figure 4 in top view;
Figure 6 shows the housing according to the embodiment of Figures 4 and 5 in side view and partly cut-away.

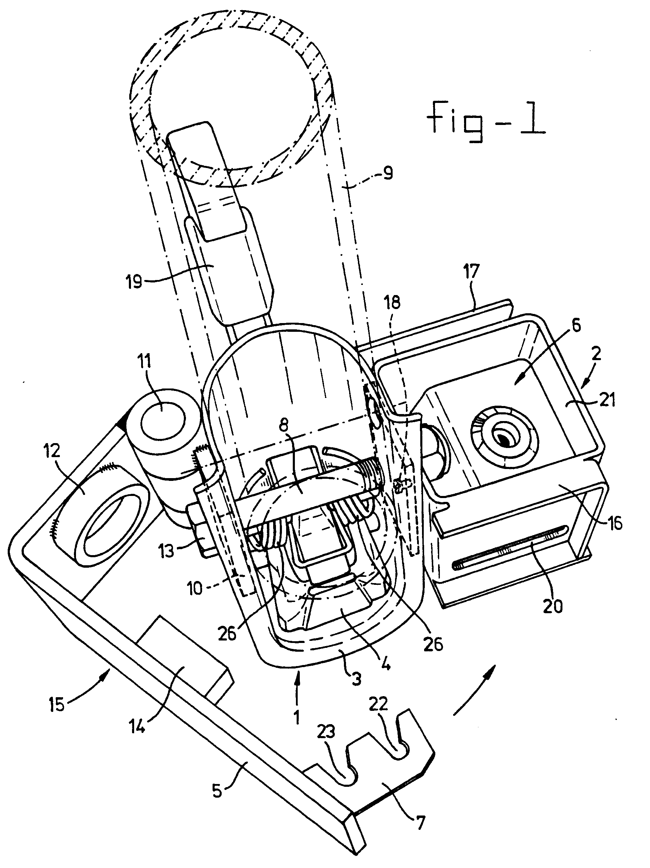

In Figure 1, an assembly is drawn of the device according to the invention, a coupling piece 1 and a pole 9.

As is apparent from Figure 1, the device according to the invention comprises a housing 2 and a latching piece 15. This device is mounted on the coupling piece 1 which is fitted on the end of the pole 9. The coupling piece 1 comprises a head 3, a ball fastener 4 and a lever 19.

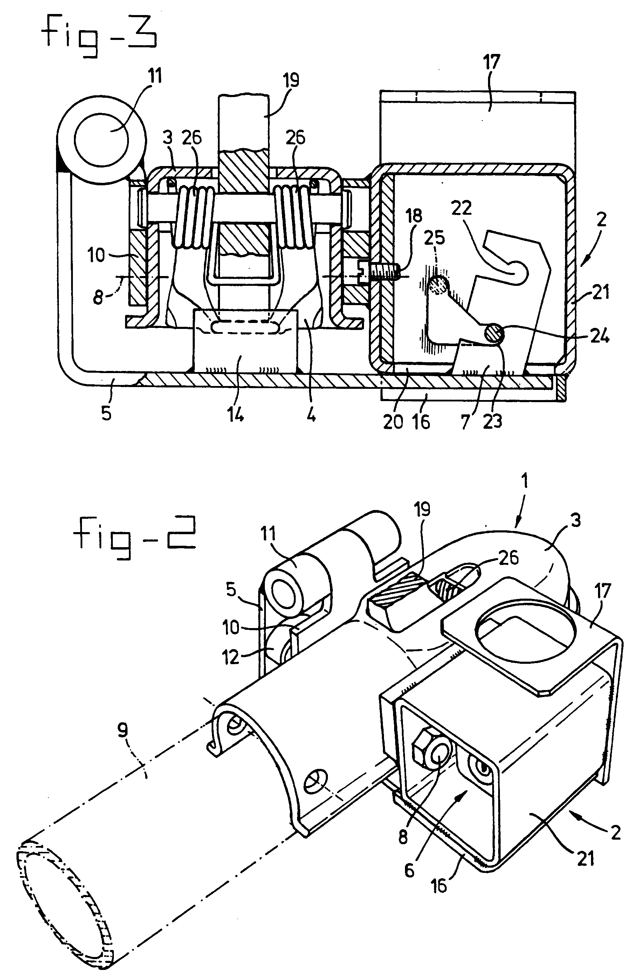

The housing 2 comprises a lock mechanism 6, a raised edge 16, a holder 17, a slot 20 and an encapsulation 21. The housing 2 is mounted on one side of the head 3. The lock mechanism 6 is countersunk in the housing 2 and comprises a latch 24, as shown in Figure 3. The lock mechanism 6 is fastened to the housing 2 by means of the bolt 18. At the bottom of the housing 2, the raised edge 16 is fitted. Said edge serves to prevent the placement of a prizing tool between the housing 2 and the latching piece 15. The holder 17 is fitted to the housing 2 and serves for holding a plug which remains when a trailer is uncoupled from a lorry. The slot 20 is situated in the encapsulation 21.

The latching piece 15 comprises a fastening plate 10, a hinge 11, a latching plate 5, a cap 12, a locking component 7 and a thickening 14. The latching piece 15 is mounted by means of the fastening plate 10 on the other side of the head 3 from the side on which the housing 2 is mounted, as mentioned above. The latching plate 5 is hingedly connected to the fastening plate 10 by the hinge 11. The cap 12, the thickening 14 and the locking component 7 are fixed to the latching plate 5, preferably by means of a welded joint. The locking component 7 is at a slight angle to the latching plate 5 and is provided with two teeth 22, 23.

The latching piece 15 and the housing 2 are mounted in the head 3, as described above. This is effected by means of a fastening bolt 8 which goes through the fastening plate 10, the head 3 and the encapsulation 21 of the housing 2. After the latching piece 15 and the housing 2 have been fitted on the head 3, the locking component 7 has to be pushed into the slot 20. In its latched position, the cap 12 covers the head 13 of the fastening bolt 8. It is then not possible to unscrew the fastening bolt 8 using standard tools.

In the situation of Figures 2 and 3, the device is in a closed or latched position. The latch 24 then engages with the tooth 23 of the locking component 7. The latch 24 can be turned to a location 25 by operating the lock mechanism 6 using a key. When the latch 24 is in this location, the locking component 7 can be pushed into and out of the slot 20. For example, the locking component 7 can be pushed in such a manner that the tooth 24 comes to lie in front, following which the latch 24 can be placed in that tooth from the location 25. In that case, the latching plate 5 is slightly turned over the hinge 11 and the device is in an open or unlatched position.

The difference between the closed and open position of the device is the situation that the thickening 14 respectively inhibits or does not inhibit a movement by the ball fastener 4. In Figure 3, where the closed position is illustrated, it is clearly shown that the thickening 14 is in front of the ball fastener 4.

The opening movement of the ball fastener 4, i.e. the movement in the direction of the thickening 14, is effected by operating the lever 19. The closing movement of the ball fastener 4, in the direction counter to the opening movement, is effected by the springs 26. In Figures 2 and 3, the lever 19 is cut halfway and the raised portion thereof is not illustrated.

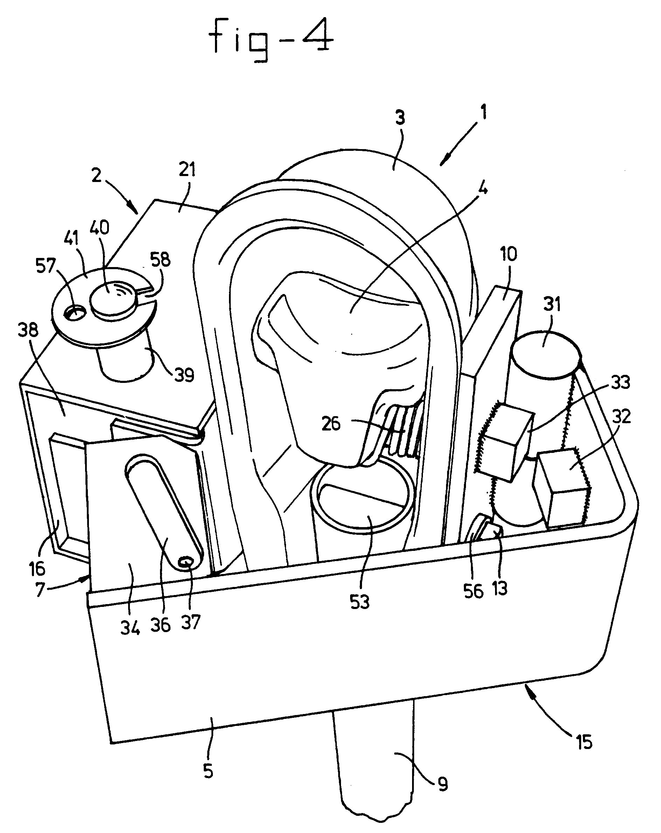

In Figures 4, 5 and 6, another embodiment of the invention is illustrated which differs from that in Figures 1 to 3 inclusive. In these three figures, corresponding elements are denoted by corresponding reference numerals.

Hinge 31 comprises a male and a female part. In order to prevent these parts sliding off each other in the closed position of the device, two blocks 32 and 33 are fitted on the latching plate 5, and the fastening plate 10, respectively.

The latching plate 5 is mounted on the male or female part of the hinge 31 or is integral with the latter. The other part is mounted on the fastening plate 10 or is integral with the latter.

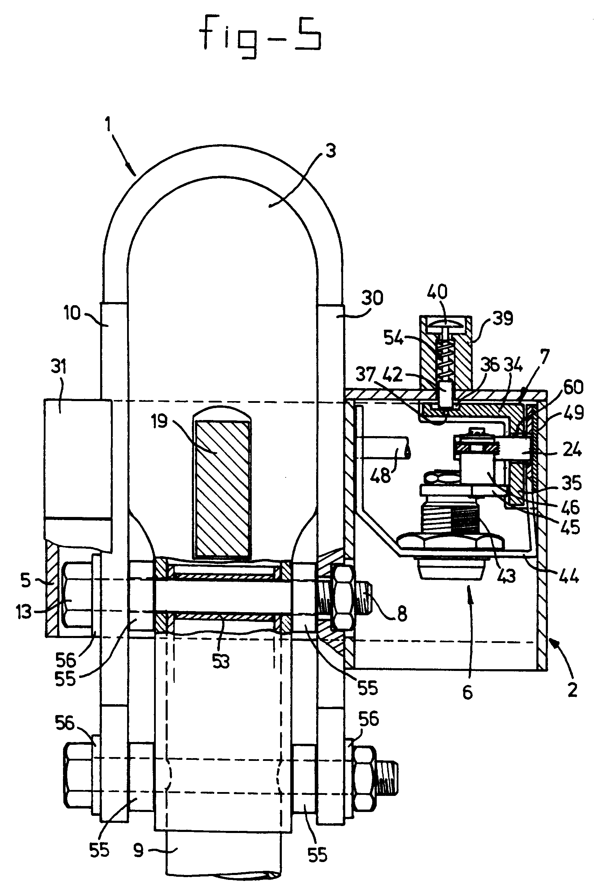

As can be seen in Figure 5, the housing 2 is attached to a fastening plate 30 which is mounted on a side of the head 3 by fastening bolts 8 and 57.

The locking component 7 comprises two locking component parts 34 and 35 which are essentially fitted at one corner of the latching plate 5, at right angles to each other. The locking component part 34 comprises a groove 36 and a through-hole 37.

A guide 39 is fitted on the housing 2, in the longitudinal direction of which a pin 40 is guided so as to be slidable. The movement of this pin 40 may be inhibited by means of a plate 41 which comprises an eye 57 and a slit 58.

By means of the eye 57, the plate 41 can be attached to a key ring or the like.

By means of the slit 58, the plate 41 can be placed between the underside of the head of the pin 40 and the free end of the guide 39.

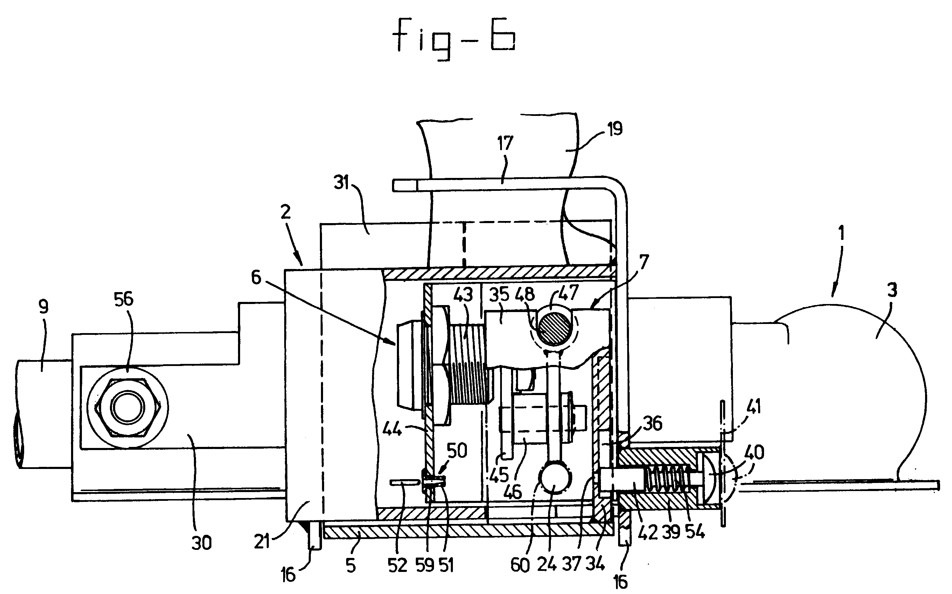

Figure 6 shows a cross section of the guide 39 with the pin 40, inhibited by the plate 41, by means of a dash-dot line. If the plate 41 is removed after the device has been mounted on the coupling piece 1 and after the locking component 7 has been placed through an opening 38 in the housing 2, the pin 40, or at least its head, is pulled axially inside the guide 39 by means of a spring 54. At the end of the pin 40, a catch 42 is fitted or is integral with the latter. This catch 42 falls exactly into the groove 36 of the locking component part 34. As a result, a mechanical connection between the latching piece 15 and the housing 2 is effected.

A sleeve 53 is fitted around the fastening bolt 8 (see Figure 5) on the inside of the pole 9. This sleeve 53 serves to strengthen the assembly of the device according to the invention, the coupling piece 1 and the pole 3 against compression from both sides. Such a sleeve can also be fitted round the fastening bolt 57, which is not shown in the figures.

As appears in Figure 5, the lock mechanism 6 comprises a frame 44, cylinder lock 43, arm 45, catch 46, guide block 47, shaft 48 and the latch 24. The elements of the lock mechanism 6 are mounted on the frame 44 which is fastened within the encapsulation 21 of the housing 2. The cylinder lock 43 may be any kind of known lock, with which an arm 45 can be operated. A catch 46 is fitted on this arm 45, which effects the movement of a guide block 47 along a shaft 48. The latch 24 is fitted on the guide block 47. In the closed position of the device (as shown in Figure 5), the latch 24 latches the latching piece 15 in the housing 2 by means of a suitable recess in locking component part 35. In the open position of the device, the guide block 47, and thus the latch 24, is on a different side of the shaft 48 than is indicated in Figure 5.

As appears from Figure 6, an opening 59 is disposed in the frame 44, through which a cover 50 is fitted. This cover 50 comprises a body 51 and a pin 52 which may or may not be fixedly attached to the body 51. By pushing the pin 52 into the tapering through-opening or the opening which narrows in the longitudinal direction relative to the pin 52, respectively, which opening is disposed in the body 51, the cover 50 becomes fixed in the opening 59 in the frame 44. The cover 50 serves to close the opening 59 in the frame 44 in order to prevent soiling of the lock mechanism 6 by dirt.

If the cover 50 is not fitted or when it has been removed, an elongated pin can be pushed through the opening 59. In the closed position of the device, this elongated pin can then be pushed through the opening 37 against the catch 42. If this elongated pin is then pushed through even further, the catch 42 can be pushed out of the groove 36. As a result, the head of the pin 40 slides out of the guide 39 counter to the spring force of the spring 54. Subsequently, the plate 41 can be placed between the underside of the head of the pin 40 and the free end of the guide 39 (as indicated by a dash-dot line in Figure 6). The elongated pin can now be withdrawn completely, so that the device can then be removed further.

As is clear from Figure 5, a plate 49 is fitted in the housing 2, between the inside of the wall of the housing 2 and one end of the latch 24.

For the purpose of mounting the device according to the invention on a coupling piece 1, spacing bushes 55 of varying thicknesses may be provided between, for example, the fastening plates 10, 30 and the coupling piece 1. Likewise, rings 56 may be provided between the nuts and/or bolt heads and, for example, the fastening plates 10 and 30.

## Claims

1. Device for protecting the coupling piece (1) of a trailer, such as a caravan, against detachment from the towing hook, characterized in that the device comprises a housing (2) which can be attached to the coupling piece (1) and which is provided with latching means for latching the coupling piece (1) in the coupling position.

2. Device according to Claim 1, comprising a coupling piece (1) having a hollow, internally partly spherical head (3) as well as a ball fastener (4) which interacts with the latter and which is displaceable between an open position in which the ball of a towing hook can be moved into or out of the coupling piece (1), and a closed position, in which the latching means are designed to latch the ball fastener (4) in the closed position.

3. Device according to Claim 2, in which a latching plate (5) is provided which is hingeable between a latching position in which it prevents the ball- fastener (4) from moving into the open position, and a releasing position.

4. Device according to Claim 3, in which the latching plate (5) is L-shaped.

5. Device according to Claim 3 or 4, in which the latching plate (5) is provided with a thickening (14) which is located, in the latched position of the latching plate (5), near the ball fastener (4) in order to prevent the opening thereof.

6. Device according to Claim 3, 4 or 5, in which the latching plate (5) is provided with a locking plate for locking the internal space of the hollow head (3).

7. Device according to Claims 1-6, in which the housing (2) is provided with a lock mechanism (6), and the latching plate (5) is provided with a locking component (7) which can be latched by means of the lock mechanism (6).

8. Device according to Claim 7, in which the lock mechanism (6) is fastened in the housing (2) by means of a bolt (18) whose bolt head is located on the housing wall facing the side of the head (3).

9. Device according to Claim 7 or 8, in which the lock mechanism (6) comprises a lock (43), and this lock mechanism is fitted on a frame (44) which is placed inside the housing (2).

10. Device according to Claim 9, in which an arm (45) is attached to the lock (43), which arm (45) interacts with a latch (24) through a catch (46).

11. Device according to Claim 10, in which the latch (24) is fitted on a shaft (48) so as to be slidable by means of a guide block (47).

12. Device according to Claims 7-11, in which the locking component (7) comprises at least two locking component parts (34;35).

13. Device according to Claim 12, in which the locking component (7;35) comprises at least one opening (60) in which the latch (24) can engage.

14. Device according to Claims 3-13, in which a fastening plate (10;30) is provided from which the latching plate (5) is hingedly suspended, which fastening plate (10; 30) has holes, in which holes of head (3) and fastening plate (10;30) a fastening bolt (8) can be placed for fastening both the head (3) and the fastening plate (10;30) to the pole (9) of the trailer.

15. Device according to Claim 14, in which the housing (2) can be fastened to one side of the head (3) of the coupling piece (1), and the latching plate (5) can be fastened in a hinged manner to the opposite side of the head (3) by means of a hinge (11;31).

16. Device according to Claim 15, in which the hinge (11;31) comprises a male and a female part, which are fitted to the latching piece (5) or the fastening plate (10:30), respectively, or the other way round, or are integral with them, and in which in each case one thickening is provided on the latching plate (5) and the fastening plate (10;30), respectively.

17. Device according to Claim 15 or 16, in which the latching plate (5) attached to the hinge (11;31) is provided with a cap (12) which, in the latched position of the latching plate, covers the head (13) of the fastening bolt (8).

18. Device according to Claims 14-17, in which fastening holes of the housing (2) can be aligned with holes in the head (3), in which holes of the head (3) and housing (2) a fastening bolt (8) can be placed in order to fasten both the head (3) and the housing (2) to the pole (9) of the trailer.

19. Device according to Claims 1-18, in which a guide (39) is fitted on the housing (2) and a pin (40) is fitted in the through-opening which is provided in the longitudinal direction of the guide (39), and in which one end the pin (40) is provided with a head and the other end of the pin (40) with a catch (42).

20. Device according to Claim 19, in which a spring (54) is provided in the guide (39) in order to pull the head of the pin (40) inside the guide (39) or to keep it inside the latter, in which the pin (40) is movable between an outermost position where the head of the pin (40) is outside the guide (39) and an innermost position where the head of the pin (40) is essentially inside the guide (39).

21. Device according to Claims 7-20, in which the locking component (7;34) comprises a groove (36) in which the catch (42) can engage when the pin (40) is in the innermost position in order to limit the hinging movement of the locking component (7).

22. Device according to Claims 19-21, in which a plate (41) is provided which comprises a slit (58) and an eye (57).

23. Device according to Claim 22, in which the plate (41) can be pushed onto the pin (40) when the pin (40) is in the outermost position, in order to hold the pin (40) in the outermost position counter to the force of the spring (54).

24. Device according to Claims 1-23, in which a sleeve (53) is fitted around at least one of the fastening bolts (8;57).

25. Device according to Claims 1-24, in which a plate (49) is fitted in the housing (2) between the inside of the wall of the housing (2) and one end of the latch (24).

26. Device according to Claims 1-25, in which spacing bushes (55) of varying thicknesses are provided between the fastening plates (10;30) and the coupling piece (1), and rings (56) between the nuts and/or bolt heads and the fastening plates (10;30).

27. Device according to Claims 1-26, in which an opening (59) is provided in the frame, in which a cover (50) can be placed which comprises a body (51) and a pin (52), the body (51) comprising a through-opening which narrows in the longitudinal direction with respect to the pin (52).

28. Device according to Claims 21-27, in which a through-opening (37) is provided in the groove (36).

29. Device according to Claim 27 or 28, in which the centre axis of the opening (37) and the opening (59) are in line with each other in order to enable an elongated pin to be pushed through both openings (37;59), which is provided in order to be able to push the catch (42) out of the groove (36).
